## Europäisches Patentamt

## European Patent Office

## Office européen des brevets

(19)

(11) Veröffentlichungsnummer: **0 051 109**
**A1**

(12) # EUROPÄISCHE PATENTANMELDUNG

(21) Anmeldenummer: **81105584.7**

(22) Anmeldetag: **16.07.81**

(51) Int. Cl.³: **H 02 G 15/115**

(30) Priorität: **30.10.80 DE 3040864**

(43) Veröffentlichungstag der Anmeldung:
**12.05.82 Patentblatt 82/19**

(84) Benannte Vertragsstaaten:
**AT BE CH DE FR GB LI NL**

(71) Anmelder: **Walter Rose GmbH & Co. KG**
**Lütkenheider Strasse 2**
**D-5800 Hagen 1(DE)**

(72) Erfinder: **Müller, Siegfried**
**Vollmannstrasse 25**
**D-5800 Hagen 8(DE)**

(74) Vertreter: **Patentanwälte Meinke und Dabringhaus**
**Westenhellweg 67**
**D-4600 Dortmund 1(DE)**

(54) **Vorrichtung zum Verbinden und Umhüllen von Kabelverbindungen, insbesondere von Breitband-Kommunikationskabeln.**

(57) Eine Vorrichtung zum Verbinden und Umhüllen von Kabelverbindungen, insbesondere von in gehäuseförmige Elektronik-Verbindung (5) einmündenden Breitband-Kommunikationskabeln (1,2,3,4) weist zwei unmittelbar ineinander steckbare, die Kabelverbindung umgebende Formteile (6,9) mit der Anzahl der einmündenden Kabel (1,2,3,4) entsprechenden Kabeleingängen (7,8,10,11) auf, wobei mindestens der das innere Formteil (6) umgebende Bereich des äußeren Formteils (9) sowie die Kabeleingänge (7,8,10,11) aus wärmeschrumpffähigem Material bestehen, um bei sicherer und schonender Befestigung der Kabel sowie einfacher Ausgestaltung der erforderlichen Kabelverbindungsteile eine einfache und schnelle Montage bei möglichst geringem Raumbedarf der fertigen Kabelverbindung zu ermöglichen.

Zwischen dem Verbindergehäuse (5) und dem inneren Formteil (6a) können Stützelemente (13) vorgesehen sein und jedes Formteil (6,9) kann einen von jedem Kabeleingang (7,8,10,11) bis zum gegenüberliegenden Ende sich erstreckenden Trennfaden (16) zum Wiederöffnen der Kabelverbindung aufweisen.

FIG. 1

Die Erfindung betrifft eine Vorrichtung zum Verbinden und Umhüllen von Kabelverbindungen, insbesondere von in gehäuseförmige Elektronik-Verbinder einmündenden Breitband-Kommunikationskabeln.

In gehäuseförmige Elektronik-Verbinder einmündende Breitband-Kommunikationskabel sind besonders empfindlich und bedürfen daher im Bereich ihrer Einmündungen in Kabelmuffen u. dgl. einer schonenden und zugleich sicheren Befestigung, insbesondere auch im Bereich ihrer Einmündung in die Elektronik-Verbinder, um die Funktionen der Kabel nicht zu beeinträchtigen. Man hat daher zum Verbinden und Umhüllen derartiger Kabelverbindungen bisher im wesentlichen Kabelmuffen verwendet, die aus miteinander verschraubbaren starren Gehäusehälften bestehen. Derartige Kabelmuffen sind aber insgesamt aufwendig und benötigen vor allem sehr viel Raum, der in engen Kabelschächten o. dgl. häufig nicht zur Verfügung steht. Man hat daher auch schon gelegentlich sogenannte Kabelschrumpfmuffen verwendet, z.B. gemäß OS 27 39 330, die zwar weniger Raum beanspruchen, aber eine Reihe von Einzelteilen aufweisen, nämlich neben der eigentlichen Schrumpfumhüllung noch Schutzeinlagen und vor allem Verbindungsklammern jeweils zwischen benachbarten Kabeleingängen, wodurch die Montage umständlich und dementsprechend zeitraubend ist.

Aufgabe der Erfindung ist die Schaffung einer Lösung, welche bei sicherer und schonender Befestigung der Kabel sowie einfacher Ausgestaltung der erforderlichen Kabelverbindungsteile eine einfache und schnelle Montage ermöglicht und wobei die fertige Kabelverbindung möglichst geringen Raum beansprucht.

Diese Aufgabe wird bei einer Vorrichtung der eingangs bezeichneten Art gemäß der Erfindung durch zwei unmittelbar ineinander steckbare, die Kabelverbindung umgebende Formteile mit der Anzahl der einmündenden Kabel entsprechenden Kabeleingängen gelöst, wobei mindestens der das innere Formteil umgebende Bereich des äußeren Formteils sowie die Kabeleingänge aus wärmeschrumpffähigem Material bestehen.

Aufgrund dieser Ausbildung sind lediglich noch die beiden ineinander steckbaren Formteile erforderlich, die genau auf den Raumbedarf für den inneren, die Kabelenden miteinander verbindenden gehäuseförmigen Elektronik-Verbinder abgestimmt sein können, so daß die Montage durch einfaches Ineinanderstecken der beiden Formteile und anschließendes Erwärmen in dem das innere Formteil umgebenden Bereich des äußeren Formteils sowie im Bereich der Kabeleingänge erfolgen kann.

Dabei empfiehlt es sich, die Kabeleingänge zu ihren freien Enden hin abnehmende Wandstärke aufweisen zu lassen, damit die für das Anschrumpfen der Kabeleingänge an die einmündenden Kabel aufzubringende Wärmemenge sehr gering gehalten werden kann, derart, daß das empfindliche Kabelinnere von Breitband-Kommunikationskabeln der in Rede stehenden Art wärmemäßig kaum belastet wird.

Besonders vorteilhaft ist es dabei, wenn sich die Außenwandung der Kabeleingänge konisch verjüngt, weil dadurch das Ausformen der Formteile im Zuge ihrer Spritzgußherstellung erleichtert wird.

Es empfiehlt sich, die Kabeleingänge in an sich bekannter Weise mit einer Klebschicht zu versehen.

Ferner kann man das innere Formteil mit einem metallischen Stützring im Überlappungsbereich mit dem äußeren Formteil versehen, um beim Anschrumpfen des äußeren Formteils ein entsprechend starres inneres Widerlager zu haben.

Bei einer Vorrichtung mit vorbestimmte Abmessungen aufweisendem inneren Verbindungsgehäuse für die einmündenden Kabel empfiehlt es sich, zwischen dem Gehäuse und dem auf die Abmessungen desselben abgestimmten inneren Formteil Stützelemente vorzusehen, um derart das Verbindergehäuse sicher festzulegen.

Eine besonders vorteilhafte Ausführung ergibt sich dabei, wenn man die Stützelemente einteilig mit dem inneren Formteil ausbildet, d.h. im allgemeinen einteilig als Spritzgußstück herstellt.

Weiterhin kann man das äußere Formteil mit nach außen gerichteten und das innere Formteil mit nach innen gerichteten Ansätzen zum zurückstülpenden Öffnen versehen, um
ein Wiederöffnen der Kabelverbindung zu erleichtern.

Zweckmäßig kann man dabei die Ansätze aus von die Formteile
bildendem Kunststoffmaterial umhüllten Metallteilen bilden,
um entsprechend hohe Öffnungskräfte auf die Formteile ausüben zu können.

Schließlich kann jedes Formteil einen von jedem Kabeleingang bis zum gegenüberliegenden Ende sich erstreckenden,
an der Innenwandung angeordneten Trennfaden aufweisen, um
bei einem erforderlich werdenden Wiederöffnen der Kabelverbindung die Formteile nach vorangegangener Erwärmung schnell
und einfach zu öffnen, und zwar unter Vermeidung von Verletzungen der im Inneren angeordneten Kabel- und Verbindungsteile, insbesondere auch im Bereich der Kabeleingänge, wie
diese beim bisher erforderlichen Aufstechen und Aufschneiden wärmeschrumpffähiger Kabelverbindungsumhüllungen leicht
auftreten können, wenn man nicht mit äußerster, entsprechende Zeit erfordernder Sorgfalt vorgeht. Natürlich ist die Anordnung eines derartigen Trennfadens nicht auf die vorstehend beschriebenen Formteile begrenzt, sondern kann mit
gleichem Vorteil auch bei anderen wärmeschrumpffähigen Umhüllungen von Kabelverbindungen bzw. Kabelmuffen Anwendung
finden.

Die Erfindung ist nachstehend anhand der Zeichnung beispielsweise näher erläutert. Diese zeigt in

Fig. 1 eine perspektivische Darstellung einer Vorrichtung gemäß der Erfindung im auseinandergezogenen Zustand,

Fig. 2 einen Schnitt durch ein inneres Formteil mit an diesem ausgebildeten Stützelement und Verbindergehäuse,

Fig. 3 einen Teillängsschnitt eines Formteiles mit einem geschnitten wiedergegebenen Kabeleingang,

Fig. 4 eine Seitenansicht einer montierten Vorrichtung gemäß der Erfindung mit einem Trennfaden und in

Fig. 5 eine Öffnungsansätze an den zugesammengeschobenen Formteilen wiedergebende Perspektive.

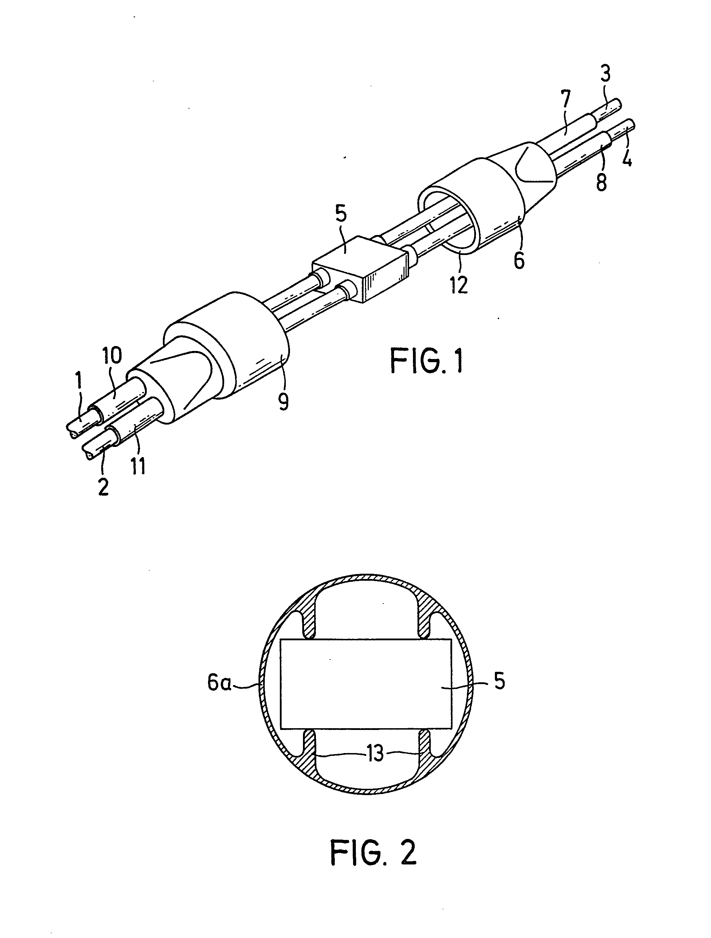

Bei dem in Fig. 1 wiedergegebenen Ausführungsbeispiel münden an einer Seite zwei Breitband-Kommunikationskabel 1 und 2 und von der anderen Seite zwei weitere Breitband-Kommunikationskabel 3 und 4 in einen gehäuseförmigen sogenannten Elektronik-Verbinder 5 ein.

Vor der Verbindung der Kabelenden mit dem Elektronik-Verbinder 5 ist auf die Kabel 3 und 4 ein inneres Formteil 6 mit Kabeleingängen 7 und 8 und einem im wesentlichen zylindrischen runden Teil aufgeschoben worden und auf die Enden der Kabel 1 und 2 ein derart bemessenes äußeres Formteil 9 mit ebenfalls zwei Kabeleingängen 10 und 11, das auf das innere Formteil 6 derart abgestimmt ist, daß das äußere Formteil 9 unter Herstellung einer Muffenverbindung über das innere Formteil 6 geschoben werden kann.

Im Inneren des inneren Formteils 6 ist ein metallischer Stützring 12 angeordnet.

Die beiden Formteile 6 und 9 bestehen aus einem wärmeschrumpffähigen Kunststoff, wobei es genügt, wenn der Über-lappungsbereich des äußeren Formteils 9 sowie die Kabeleingänge 7, 8 und 10, 11 jeweils in einen schrumpffähigen Zustand gebracht worden sind.

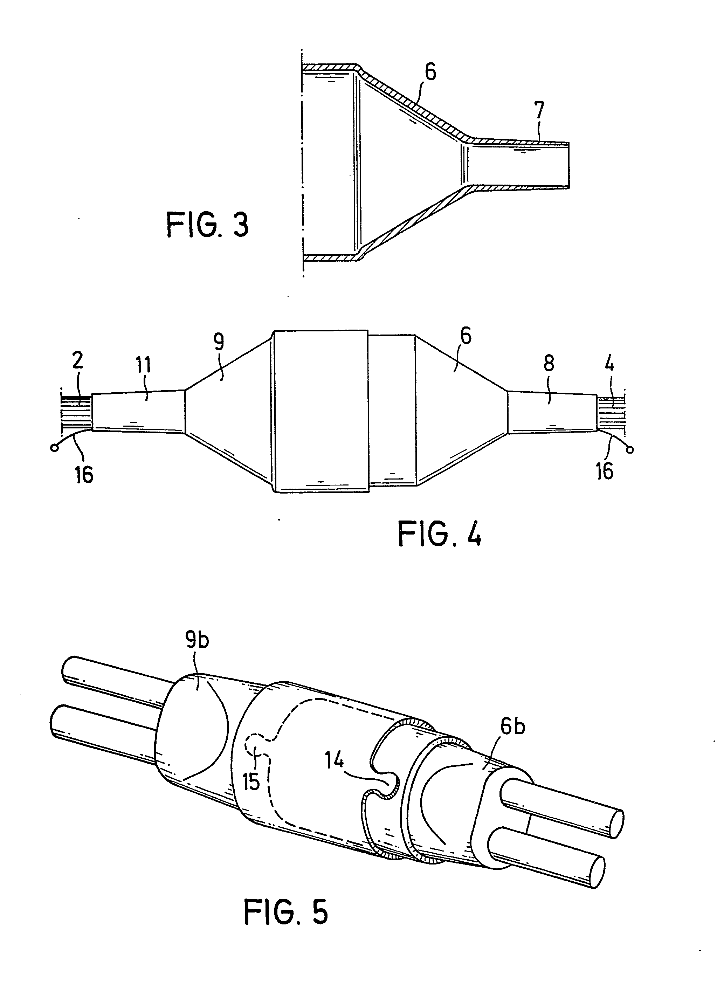

Die Kabeleingänge 7, 8, 10 und 11 sind innen zylindrisch ausgebildet, während deren Außenwandungen sich zu den freien Enden hin konisch verjüngen, wie insbesondere Figur 3 zeigt.

An Stelle des metallischen Stützringes 12 kann ein inneres Formteil 6a auch mit einstückig mit diesen ausgebildeten Stützelementen 13 ausgebildet sein, die derart auf die Abmessungen des inneren Elektronik-Verbinders 5 abgestimmt sind, daß die Stützelemente sich im montierten Zustand gegen das Elektronik-Verbindergehäuse 5 abstützen.

Wie Fig. 5 zeigt, sind an einem äußeren Formteil 9b Ansätze 14 und an einem inneren Formteil 6b Ansätze 15 vorgesehen, die ggf. auch als in das Kunststoffmaterial der Formteile eingebettete metallische Ansätze ausgebildet sein können.

Jedes Formteil kann auch mit einem Trennfaden 16 ausgerüstet sein, wie Fig. 4 zeigt, der sich jeweils von einem Kabeleingang 8 bzw. 11 bis zum gegenüberliegenden Ende an der Innenwandung des betreffenden Formteils erstreckt, wobei an einem vorzugsweise im Bereich des betreffenden Kabeleinganges 8 bzw. 11 heraushängenden Ende des Trennfadens 16 eine Handhabe, wie eine Verdickung o. dgl., ausgebildet ist.

Die Montage einer vorbeschriebenen Kabelverbindung ist denkbar einfach, da hierzu lediglich vor der Verbindung der einmündenden Kabel mit dem Elektronik-Verbinder, die beiden Formteile 6 und 9 über die freien Enden der einmündenden Kabel geschoben zu werden brauchen, worauf der Anschluß der Kabelenden an den Elektronik-Verbinder erfolgt und dann zunächst das innere Formteil 6 über den Elektronik-Verbinder 5 und darüber dann das äußere Formteil 9 geschoben wird. Anschließend braucht dann nur noch das äußere Formteil im Überlappungsbereich mit dem inneren Formteil durch Wärmeaufbringung angeschrumpft zu werden und ebenso werden Kabeleingänge 7, 8 und 10, 11 an die Kabel 1, 2 und 3, 4 angeschrumpft, wobei im letzteren Fall eine sehr geringe Wärmeaufbringung im Bereich der einmündenden Kabel wegen der sich verjüngenden Wandstärke der Kabeleingänge erforderlich ist, um unter Schmelzen eines im Inneren der Kabeleingänge angebrachten Klebers eine dichtende Verbindung zu erzielen.

Für den Fall, daß die Verbindung später wieder geöffnet werden muß, kann man die Formteile wieder erwärmen und mittels der Ansätze 14 am äußeren Formteil 9b und der Ansätze 15 am Formteil 6b zurückstülpend öffnen.

Eine solche Wiederöffnung der Kabelverbindung kann naturgemäß noch wesentlich erleichtert werden, wenn man nach Erwärmung der Formteile die Trennfäden 16 aufzieht, wobei sich ein besonders gutes Ablösen dann ergibt, wenn man beispielsweise bei Formteilen mit jeweils zwei Kabeleingängen in jedem Kabeleingang in den voneinander am weitesten entfernt liegenden Bereichen der Kabeleingänge die Trennfäden anordnet, derart, daß sich nach dem Aufreißen der betreffenden Formteile zwei etwa gleich große Formteilhälften ergeben, wobei man zweckmäßig dann noch die Ansätze 14 und 15 mittig zwischen den Trennfäden 16 ausbilden kann, um die Formteilhälften mittels der betreffenden Ansätze abzuziehen.

Natürlich sind die beschriebenen Ausführungsbeispiele abzuändern, ohne den Grundgedanken der Erfindung zu verlassen. Beispielsweise kann man den Formteilen anstelle der wiedergegebenen zylindrischen Querschnittsform auch einen elliptischen Querschnitt geben, um eine noch bessere raumsparende Anpassung an rechteckförmige Verbindergehäuse zu ermöglichen u. dgl. mehr.

Ansprüche :

1. Vorrichtung zum Verbinden und Umhüllen von Kabelverbindungen, insbesondere von in gehäuseförmige Elektronik-Verbinder einmündenden Breitband-Kommunikationskabeln, gekennzeichnet durch zwei unmittelbar ineinander steckbare, die Kabelverbindung umgebende Formteile (6,9) mit der Anzahl der einmündenden Kabel (1,2,3,4) entsprechenden Kabeleingängen (7,8,10,11), wobei mindestens der das innere Formteil (6) umgebende Bereich des äußeren Formteils (9) sowie die Kabeleingänge (7,8,10,11) aus wärmeschrumpffähigem Material bestehen.

2. Vorrichtung nach Anspruch 1, dadurch gekennzeichnet, daß die Kabeleingänge (7,8,10,11) zu ihren freien Enden hin abnehmende Wandstärke aufweisen.

3. Vorrichtung nach Anspruch 2, dadurch gekennzeichnet, daß sich die Außenwandung der Kabeleingänge (7,8,10,11) konisch verjüngt.

4. Vorrichtung nach Anspruch 1 oder einem der folgenden, dadurch gekennzeichnet, daß die Kabeleingänge (7,8,10,11) in an sich bekannter Weise mit einer inneren Klebeschicht versehen sind.

5. Vorrichtung nach Anspruch 1 oder einem der folgenden, dadurch gekennzeichnet, daß das innere Formteil (6) mit einem metallischen Stützring (12) im Überlappungsbereich mit dem äußeren Formteil (9) versehen ist.

- 10 -

0051109

6. Vorrichtung nach Anspruch 1 bis 4, mit vorbestimmte Abmessungen aufweisendem inneren Verbindungsgehäuse, dadurch gekennzeichnet, daß zwischen dem Verbindergehäuse (5) und dem inneren Formteil (6a) Stützelemente (13) vorgesehen sind.

7. Vorrichtung nach Anspruch 6, dadurch gekennzeichnet, daß die Stützelemente (13) einteilig mit dem inneren Formteil (6a) ausgebildet sind.

8. Vorrichtung nach Anspruch 1 oder einem der folgenden, dadurch gekennzeichnet, daß das äußere Formteil (9b) und das innere Formteil (6b) mit Ansätzen (14,15) zum zurückstülpenden Öffnen versehen sind.

9. Vorrichtung nach Anspruch 8, dadurch gekennzeichnet, daß die Ansätze aus von die Formteile bildendem Kunststoffmaterial umhüllten Metallteilen bestehen.

10. Vorrichtung, insbesondere nach Anspruch 1 oder einem der folgenden, dadurch gekennzeichnet, daß jedes Formteil (6,9) einen von jedem Kabeleingang (7,8,10,11) bis zum gegenüberliegenden Ende sich erstreckenden, an der Innenwandung angeordneten Trennfaden (16) aufweist.

FIG.1

FIG. 2

FIG. 3

FIG. 4

FIG. 5

0051109

Europäisches
Patentamt

**EUROPÄISCHER RECHERCHENBERICHT**

Nummer der Anmeldung

EP 81 10 5584

| | **EINSCHLÄGIGE DOKUMENTE** | | KLASSIFIKATION DER ANMELDUNG (Int Cl ·) |
|---|---|---|---|
| Kategorie | Kennzeichnung des Dokuments mit Angabe, soweit erforderlich, der maßgeblichen Teile | betrifft Anspruch | |
| X | DE - B - 2 442 495 (SIEMENS) <br><br> * ganzes Dokument * <br><br> -- | 1,5 | H 02 G 15/115 |
| A | DE - U - 75 30 187 (W. ROSE) <br><br> * Seite 5, Absätze 2 bis 4; Figur 1 * <br><br> -- | 2,3 | |
| A | DE - A - 1 465 462 (EMPIRE PRODUCTS) <br><br> * Seite 7, Absatz 2; Seite 10, Absatz 2; Figuren 5 bis 7 * <br><br> -- | 6,7 | RECHERCHIERTE SACHGEBIETE (Int. Cl.³) <br><br> H 02 G 15/115 <br> 15/18 <br> 15/10 <br> 15/192 |
| A | DE - A - 1 465 485 (ELASTIC STOP NUT) <br><br> * Seite 13, Zeilen 6 bis 11; Figuren 1 bis 8 * <br><br> -- | 8 | |
| A | US - A - 3 896 260 (W.A. PLUMMER) <br><br> * Spalte 4, Zeile 67 bis Spalte 5, Zeile 10; Figuren 5,9 und 11 * <br><br> ------ | 10 | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort Den Haag | Abschlußdatum der Recherche 05.02.1982 | Prüfer LOMMEL |
|---|---|---|

EPA form 1503.1  06.78